# EUROPEAN PATENT SPECIFICATION

(11) **EP 0 607 806 B1**
(45) Date of publication and mention of the grant of the patent: **22.12.1999**
(21) Application number: 94100128.1
(22) Date of filing: 05.01.1994
(51) Int. Cl.: H01M 4/38, H01M 10/24

(54) **Alkaline storage battery and method for producing the same**
Alkalische Speicherbatterie und Verfahren zur Herstellung derselben
Pile de stockage alcaline et méthode pour sa fabrication

(30) Priority: 18.01.1993 JP 559193
(43) Date of publication of application: 27.07.1994
(73) Proprietor: MATSUSHITA ELECTRIC INDUSTRIAL CO., LTD., Kadoma-shi, Osaka-fu, 571 (JP)
(72) Inventor: Okawa, Takashi, Fujisawa-shi (JP); Enokido, Masashi, Chigasaki-shi (JP); Tsuda, Shingo, Fujisawa-shi (JP); Akutsu, Norikatsu, Tokyo (JP)
(74) Representative: Patentanwälte Leinweber & Zimmermann

(56) References cited:
- CHEMICAL ABSTRACTS, vol. 106, no. 10, 1987, March 9, Columbus, Ohio, USA S. MURAKAMI et al. "Metal- Hydrogen alkaline battery" page 195, no. 70 299k; & JP-A-61 168 869 (JPN. KOKAI TOKKYO KOHO)
- CHEMCIAL ABSTRACTS, vol. 106, no. 2, January 12, 1987, Columbus, Ohio, USA S. FURUKAWA et al. "Hydrogen- absorbing anode" page 151, no. 7 561z; & JP-A-61 176 065 (JPN. KOKAI TOKKYO KOHO)
- CHEMICAL ABSTRACTS, vol. 106, no. 2, 1987, January 12, Columbus, Ohio, USA S. FURUKAWA et al. "Hydrogen- absorbing anode" page 151, no. 7 562a; & JP-A-61 176 067 (JPN. KOKAI TOKKYO KOHO)
- CHEMICAL ABSTRACTS, vol. 116, no. 22, 1992, June 1, Columbus, Ohio, USA A. FURUKAWA et al. "Hydrogen- absorbing anodes" page 232, no. 218 087u; & JP-A-03 191 040 (JPN. KOKAI TOKKYO KOHO)

## Description

### BACKGROUND OF THE INVENTION

### Field of the Invention

The present invention relates to an alkaline storage battery which has a negative electrode comprising a hydride or a hydrogen-storing alloy capable of reversibly occluding and releasing hydrogen, namely, a hydrogen-storing negative electrode and a positive electrode comprising a metal oxide and a method for producing the battery.

### Description of Related Art

It is proposed in JP-62-211862A that the utilization of active material in charging and discharging in nickel·cadmium storage batteries can be improved by adding a small amount of yttrium oxide to the powders mainly composed of cadmium oxide constituting the negative electrode. However, this patent publication does not disclose the use of yttrium oxide in a hydrogen-storing alloy negative electrode and merely shows to enhance the capacity of a battery by improving the utilization of cadmium negative electrode.

It has further been proposed to add rare metals to a hydrogen-storing alloy negative electrode, but it is not disclosed to inhibit oxidation of the hydrogen-storing alloy by the addition of rare metals.

On the other hand, alkaline storage batteries having a hydrogen-storing electrode as a negative electrode have recently been noticed as batteries having higher energy density and having a clean image as compared with conventional secondary batteries such as nickel·cadmium storage batteries and lead acid batteries.

Alkaline storage batteries in which a hydrogen-storing electrode of this kind is used as a negative electrode undergo oxidation of the hydride or hydrogen-storing alloy which constitutes the negative electrode after repetition of charging and discharging cycles and, as a result, the performance of the batteries deteriorates. Usually, the oxygen gas generated from a positive electrode during the overcharge cycle accelerates the oxidation of the hydrogen-storing alloy. Consequently, the charge acceptance of the hydrogen-storing alloy decreases and the hydrogen pressure increases during charging to bring about increase of internal cell pressure and actuation of a valve. Thus, electrolyte is lost and internal resistance of the batteries increases to result in reduction of discharge capacity after subjected to charging and discharging cycles.

In order to control the above-mentioned oxidation, it has been proposed to make a negative electrode using powders of a hydrogen-storing alloy coated with carbonaceous materials or to coat the surface of said powders with a metal such as copper or nickel by plating or vapor deposition.

Use of the above negative electrode comprising powders of hydrogen-storing alloy which are coated with carbonaceous materials, copper or nickel improves oxidation resistance of the electrode per se and restrains oxidation of the hydrogen-storing alloy and, as a result, prolongs the life of the electrode.

However, according to the method of coating the surface of powders with carbonaceous materials, copper or nickel, cracks occur in the powders of the hydrogen-storing alloy after repetition of charging and discharging to produce a fresh active surface. This fresh active surface is oxidized and hydrogen-storing ability of the hydrogen-storing alloy decreases and thus, the effect to restrain the oxidation is insufficient.

JP-A-61 168 869, JP-A-61 176 065, JP-A-61 176 067 and JP-A-03 191 040 disclose alkaline storage batteries with a hydrogen-storing alloy negative electrode, said hydrogen-storing alloy comprising, i.a. yttrium. Said electrodes are prepared as follows: mixing the respective elemental compositions, melting said mixture, cooling said molten mixture and ball-milling the cooled alloy to form powders.

### SUMMARY OF THE INVENTION

The main object of the present invention is to improve the charge and discharge cycle characteristics of batteries by inhibiting oxidation of negative electrode without complicating the production steps of the batteries and without increasing the production cost of the batteries.

### BRIEF DESCRIPTION OF THE DRAWING

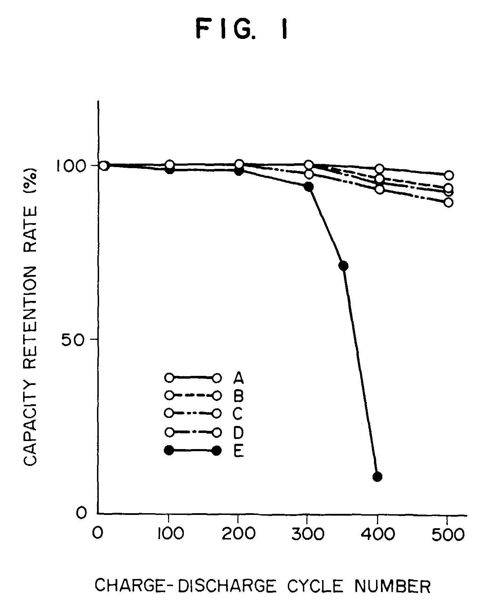

Fig. 1 is a graph showing the charge-discharge cycle characteristics of the battery of the present invention.

### DETAILED DESCRIPTION OF PREFERRED EMBODIMENTS

The alkaline storage battery of the present invention for attaining the above object comprises a metal oxide positive electrodes, a negative electrode composed of powders comprising a hydrogen-storing alloy or a hydride, a separator and an alkaline electrolyte wherein the negative electrode contains at least one additive selected from yttrium and yttrium compounds.

The above additive is desirably coated on the surface of the powders used for the negative electrode, added into the negative electrode or applied to the outer surface of the negative electrode.

When the additive which is at least one of yttrium and yttrium compounds is coated on the surface of the hydrogen-storing alloy or hydride or added to the hydrogen-storing alloy negative electrode, the surface of the hydrogen-storing alloy or the like is covered with yttrium or yttrium compound and oxidation of the negative electrode during overdischarge is inhibited.

Furthermore, even when cracks occur in the hydrogen-storing alloy or the like due to repetition of charging and discharging and fresh active surfaces are produced, yttrium or yttrium compounds dissolve in the alkaline solution to precipitate on the fresh active surfaces and cover the surface of the negative electrode. Consequently, oxidation of the negative electrode can be inhibited and increase of the internal cell pressure and increase of the internal resistance of the battery are inhibited, and cycle characteristics as a battery are improved.

The amount of yttrium and yttrium compounds contained in the negative electrode is preferably 0.1-10 parts by weight based on 100 parts by weight of the hydrogen-storing alloy powders. When the amount is less than 0.1 part by weight, the effect to improve the charging and discharging cycle characteristics is lost and when it is more than 10 parts by weight, amount of the hydrogen-storing alloy powders per unit volume of the negative electrode decreases and a large capacity cannot be obtained.

The following examples will illustrate the present invention.

### Example 1

Commercially available Mm (Misch metal), Ni, Co, Al and Mn were weighed at a given ratio and mixed. The mixture was heated and molten by arc melting method to prepare a hydrogen-storing alloy for negative electrode which had a CaCu₅ type crystal structure and an alloy composition of MmNi_{3.5}Co_{0.75}Al_{0.3}Mn_{0.4}.

The resulting alloy was milled by a ball mill to an average particle size of about 20 µm. To this alloy was added yttrium oxide in an amount of 1 part by weight based on the hydrogen-storing alloy powders. Furthermore, a 1 wt% aqueous carboxymethylcellulose solution was added thereto to prepare a paste. With this paste was filled a foamed nickel porous body of about 95% in porosity. The porous body was dried and pressed to a given thickness to make a hydrogen-storing alloy electrode.

An element was fabricated using the above electrode as a negative electrode, a known foamed metal type nickel positive electrode of 1000 mAh in capacity and a separator of a sulfonated polypropylene nonwoven fabric. This element was inserted in a metallic case and filled with an aqueous potassium hydroxide solution. Then, the case was sealed to obtain a battery of AA size of Example 1.

### Example 2

A 1 wt% aqueous carboxymethylcellulose solution was added to the hydrogen-storing alloy powders prepared in Example 1 to obtain a paste. With this paste was filled a foamed nickel porous body of about 95% in porosity. The porous body was dried and pressed to a given thickness to make a hydrogen-storing alloy electrode. This hydrogen-storing alloy electrode was immersed in an aqueous yttrium sulfate solution of 1 mol/l for about 1 minute and then dried at 100°C for 30 minute. Thereafter, the electrode was dipped in an alkaline solution, washed with water and dried.

A sealed alkaline storage battery was prepared in the same manner as in Example 1 except that the above obtained electrode was used as a negative electrode.

### Example 3

The hydrogen-storing alloy powders prepared in Example 1 were immersed in an aqueous yttrium sulfate solution of 1 mol/l for about 1 minute and then dried at 100°C for 30 minute. Thereafter, the powders were dipped in an alkaline solution, washed with water and dried to obtain a hydrogen-storing alloy.

A 1 wt% aqueous carboxymethylcellulose solution was added to the hydrogen-storing alloy to obtain a paste. With this paste was filled a foamed nickel porous body of about 95% in porosity. The porous body was dried and pressed to a given thickness to make a hydrogen-storing alloy electrode.

A sealed alkaline storage battery was prepared in the same manner as in Example 1 except that the above obtained electrode was used as a negative electrode.

### Example 4

The hydrogen-storing alloy prepared in Example 1 was immersed in an aqueous yttrium sulfate solution of 1 mol/l for about 1 minute and then subjected to thermal decomposition at 500°C under vacuum. A 1 wt% aqueous carboxymethylcellulose solution was added to the resulting hydrogen-storing alloy powders to prepare a paste. With this paste was filled a foamed nickel porous body of about 95% in porosity. The porous body was dried and pressed to a given thickness to make a hydrogen-storing alloy electrode.

A sealed alkaline storage battery was prepared in the same manner as in Example 1 except that the above obtained electrode was used as a negative electrode.

### Comparative Example

For comparison, a hydrogen-storing alloy negative electrode containing neither yttrium nor yttrium compound was prepared using the hydrogen-storing alloy prepared in Example 1 and a sealed alkaline storage battery was prepared in the same manner as in Example 1 except that the above obtained negative electrode was used.

Each of the above batteries was subjected to the following charging and discharging cycle test.

The battery was subjected to repetition of a cycle which comprises charging with a current corresponding to 1/3 C for 4.5 hours at 20°C and full discharging with a current corresponding to 1 C, and change in capacity with the cycle number was evaluated.

Fig.1 is a graph which shows the relation between the cycle number and the capacity retention rate when the capacity after the 1st cycle is assumed to be 100.

In Fig.1, A, B, C, D and E show the batteries of Examples 1, 2, 3 and 4 and Comparative Example, respectively.

As is clear from Fig.1, the batteries A, B, C and D prepared using the hydrogen-storing alloy negative electrode containing yttrium or yttrium compound according to the present invention were remarkably improved in charging and discharging cycle characteristics as compared with the battery E of Comparative Example prepared using the hydrogen-storing alloy negative electrode containing neither yttrium nor yttrium compound.

In the above Examples, yttrium oxide was used as the additive to the negative electrode, but the same effect can be obtained by using other yttrium compounds or simple yttrium or mixtures thereof.

Furthermore, in the above Examples, yttrium sulfate was used as yttrium salt, but the same effect can be obtained by using yttrium salts such as yttrium chloride and yttrium nitrate.

Moreover, the thermal decomposition was carried out under vacuum in the above Examples, but the same effect can be obtained when it is carried out in an inert atmosphere or a reducing atmosphere. In addition, the same effect can also be obtained when a hydride is used in place of the hydrogen-storing alloy.

As explained above, according to the present invention, alkaline storage batteries excellent in charging and discharging cycle characteristics can be obtained by adding to a hydrogen-storing alloy negative electrode one or both of yttrium and yttrium compounds.

## Claims

1. An alkaline storage battery which comprises a metal oxide positive electrode, a hydrogen-storing alloy negative electrode, a separator and an alkaline electrolyte characterized in that said negative electrode comprises a hydrogen-storing alloy or hydride powder and an additive containing at least one selected from the group consisting of yttrium and yttrium compounds.

2. An alkaline storage battery according to claim 1 wherein said additive is coated on the surface of the powders, is added to the inside of the negative electrode or is applied to the outer surface of the negative electrode.

3. A method for producing an alkaline storage battery wherein the negative electrode is prepared by adding at least one of yttrium and yttrium compounds to powders comprising a hydrogen-storing alloy or a hydride, kneading the powders to prepare a paste for electrode and coating the paste on a conductive substrate of the negative electrode or filling the conductive substrate with the paste.

4. A method for producing an alkaline storage battery wherein the negative electrode which comprises a powder of a hydrogen-storing alloy or hydride is immersed in a solution containing an yttrium salt and then is subjected to drying, dipping in an aqueous alkaline solution, washing with water and drying in succession.

5. A method for producing an alkaline storage battery wherein the negative electrode is prepared by immersing powders comprising a hydrogen-storing alloy or a hydride in a solution containing an yttrium salt, then subjecting the powders to drying, dipping in an aqueous alkaline solution, washing with water and drying in succession, preparing a paste for electrode using the thus treated powders and coating the paste on a conductive substrate of the negative electrode or filling the conductive substrate with the paste.

6. A method for producing an alkaline storage battery wherein the negative electrode is prepared by immersing powders comprising a hydrogen-storing alloy or a hydride in a solution containing an yttrium salt, then subjecting the powders to a thermal decomposition treatment, preparing a paste for electrode using the thus treated powders and coating the paste on a conductive substrate of the negative electrode or filling the conductive substrate with the paste.

## Patentansprüche

1. Alkalische Speicherbatterie mit einer positiven Metalloxidelektrode, einer negativen Wasserstoffspeicherlegierungselektrode, einem Scheider und einem alkalischen Elektrolyten, dadurch gekennzeichnet, daß die negative Elektrode ein Wasserstoffspeicherlegierungs- oder Hydridpulver und ein Zusatzmittel mit zumindest Yttrium oder einer Yttriumverbindung enthält.

2. Alkalische Speicherbatterie nach Anspruch 1, bei der das Zusatzmittel als Beschichtung auf die Oberfläche der Pulver aufgebracht ist, der Innenseite der negativen Elektrode hinzugefügt ist oder auf die Außenoberfläche der negativen Elektrode aufgebracht ist.

3. Verfahren zur Herstellung einer alkalischen Speicherbatterie, bei dem die negative Elektrode hergestellt wird durch Zugeben von zumindest Yttrium oder einer Yttriumverbindung zu Pulvern mit einer Wasserstoffspeicherlegierung oder einem Hydrid, Mischen bzw. Kneten der Pulver zur Herstellung einer Paste für eine Elektrode und als Beschichtung Aufbringen der Paste auf ein leitfähiges Substrat der negativen Elektrode oder Füllen des leiffähigen Substrats mit der Paste.

4. Verfahren zur Herstellung einer alkalischen Speicherbatterie, bei dem die negative Elektrode, die ein Pulver aus einer Wasserstoffspeicherlegierung oder einem Hydrid enthält, in einer ein Yttriumsalz enthaltende Lösung gebadet wird und dann getrocknet, in eine wäßrige alkalische Lösung eingetaucht, mit Wasser gewaschen und getrocknet wird, und zwar aufeinanderfolgend.

5. Verfahren zur Herstellung einer alkalischen Speicherbatterie, bei dem die negative Elektrode hergestellt wird durch Baden von eine Wasserstoffspeicherlegierung oder ein Hydrid enthaltenden Pulvern in einer ein Yttriumsalz enthaltenden Lösung, dann Trocknen, Eintauchen in eine wäßrige alkalische Lösung, Waschen mit Wasser und Trocknen der Pulver, und zwar aufeinanderfolgend, Herstellen einer Paste für eine Elektrode unter Verwendung der so behandelten Pulver und als Beschichtung Aufbringen der Paste auf ein leiffähiges Substrat der negativen Elektrode oder Füllen des leiffähigen Substrats mit der Paste.

6. Verfahren zur Herstellung einer alkalischen Speicherbatterie, bei dem die negative Elektrode hergestellt wird durch Baden von eine Wasserstofflegierung oder ein Hydrid enthaltenden Pulvern in einer ein Yttriumsalz enthaltenden Lösung, dann Durchführen einer thermischen Zersetzungsbehandlung mit den Pulvern, Herstellen einer Paste für eine Elektrode unter Verwendung der so behandelten Pulver und als Beschichtung Aufbringen der Paste auf ein leiffähiges Substrat der negativen Elektrode oder Füllen des leiffähigen Substrats mit der Paste.

## Revendications

1. Accumulateur alcalin qui comprend une électrode positive en oxyde métallique, une électrode négative en alliage emmagasinant de l'hydrogène, un élément de séparation et un électrolyte alcalin, caractérisé en ce que ladite électrode négative comprend une poudre d'alliage emmagasinant de l'hydrogène ou d'hydrure et un additif contenant au moins un élément sélectionné du groupe constitué de l'yttrium et de composés d'yttrium.

2. Accumulateur alcalin selon la revendication 1, dans lequel ledit additif est enduit sur la surface des poudres, est ajouté à l'intérieur de l'électrode négative ou bien est appliqué à la surface externe de l'électrode négative.

3. Procédé de fabrication d'un accumulateur alcalin, dans lequel l'électrode négative est préparée en ajoutant au moins l'un de l'yttrium et des composés d'yttrium à des poudres comprenant un alliage emmagasinant de l'hydrogène ou un hydrure, en malaxant les poudres afin de préparer une pâte destinée à l'électrode et en appliquant la pâte sur un substrat conducteur de l'électrode négative ou en remplissant le substrat conducteur avec la pâte.

4. Procédé de fabrication d'un accumulateur alcalin, dans lequel l'électrode négative qui comprend une poudre d'un alliage emmagasinant de l'hydrogène ou d'un hydrure est immergée dans une solution contenant un sel d'yttrium et est ensuite successivement soumise à un séchage, une immersion dans une solution aqueuse alcaline, un rinçage à l'eau et un séchage.

5. Procédé de fabrication d'un accumulateur alcalin, dans lequel l'électrode négative est préparée en immergeant des poudres comprenant un alliage emmagasinant de l'hydrogène ou un hydrure dans une solution contenant un sel d'yttrium, puis en soumettant successivement les poudres à un séchage, une immersion dans une solution aqueuse alcaline, un rinçage à l'eau et un séchage, en préparant une pâte destinée à l'électrode en utilisant les poudres ainsi traitées et appliquant la pâte sur un substrat conducteur de l'électrode négative ou bien remplissant le substrat conducteur avec la pâte.

6. Procédé de fabrication d'un accumulateur alcalin, dans lequel l'électrode négative est préparée en immergeant des poudres comprenant un alliage emmagasinant de l'hydrogène ou un hydrure dans une solution contenant un sel d'yttrium, puis en soumettant successivement les poudres à un traitement de décomposition thermique, en préparant une pâte destinée à l'électrode en utilisant les poudres ainsi traitées et en appliquant la pâte sur un substrat conducteur de l'électrode négative ou bien en remplissant le substrat conducteur avec la pâte.
